# EUROPEAN PATENT APPLICATION

(11) **EP 1 063 588 A1**
(43) Date of publication of application: **27.12.2000**
(21) Application number: 99112227.6
(22) Date of filing: 25.06.1999
(51) Int. Cl.: G06F 9/32, G06F 9/46

(54) **A system for allowing a central processing unit to access a plurality of interrupt handler routines and a method thereof**

(71) Applicant: MOTOROLA, INC., Schaumburg, IL 60196 (US)
(72) Inventor: Sukonik, Vitaly, Katsir 37010 (IL); Miretsky, Alexander, Haifa 34566 (IL); Natan, Rami, Ramat Gan 64259 (IL); Dor, Amit, Ramat Gan 52297 (IL)
(74) Representative: Richardt, Markus Albert

(57) **Abstract**

A method and an apparatus for allowing a central processing unit to access a plurality of interrupt handler routines and especially for allowing an embedded microcomputer to handle multiple interrupt request in a fast and an efficient manner. The method and apparatus involve the generation of an selected address, which pointer either to a selected interrupt vector or to a selected interrupt request handler routine. The interrupt vector stores a branch instruction to the selected interrupt request handler.

## Description

### FIELD OF THE INVENTION

The present invention relates generally to a system for allowing a central processing unit to access a plurality of interrupt handler routines and especially for allowing an embedded microcomputer to handle multiple interrupt request in a fast and an efficient manner.

### BACKGROUND OF THE INVENTION

Microcomputer systems generally have a central processing unit (i.e.- CPU) which is coupled to an interrupt controller and to a memory module. The interrupt controller is coupled to a plurality of interrupt request generators. When an interrupt request generator requires the attention of the CPU, it sends the interrupt controller an interrupt request (i.e. -IREQ). An interrupt request generator can be an external peripheral such as a I/O device, or an internal device such as a multiply and accumulate unit. The interrupt controller determines which of the interrupt requests has a highest priority, determines whether the incoming interrupt request has a higher priority value than the level currently being serviced, and issues a CPU interrupt request (i.e.- IRQ) to the CPU based upon this determination. The CPU completes executing whatever instruction that is currently being executed and sends a CPU pointer address, the CPU pointer address points to a CPU interrupt vector which is stored in the memory module. The CPU interrupt vector points to a CPU interrupt request handler routine. The CPU interrupt request handler routine comprises of a set of instructions, which are sent to the CPU, whereas the CPU executes these instructions and services interrupt requests. After the CPU finishes to execute the CPU interrupt request handler routine, it resumes to the instruction set which was executed before it started to execute the CPU interrupt request handler routine.

Some prior art microprocessors could access a limited number of CPU interrupt vectors within the memory module. This number is usually fixed, and can not be increased. For example, Motorola MPC 821 can access 25 CPU interrupt vectors, wherein just a single CPU interrupt vector and a single CPU interrupt request handler routine are associated to an IREQ from an external peripheral. ("MPC821 Portable System Microprocessor User's Manual, Pg. 7-8). The execution of a CPU interrupt request handler routine that can handle a plurality of interrupt requests involves checking which interrupt request was selected by the interrupt controller.

There are various ways to perform this check, and a very common one is to read the content of an interrupt register within the interrupt controller, the register stores a selected pointer address, the selected pointer address points to a selected interrupt vector, the selected interrupt vector has a first portion for storing a routine pointer, the routine pointer points to a selected interrupt request handler routine. A second portion of the interrupt vector can store a "branch" operand, causing the CPU to fetch the first instruction of the selected interrupt handler routine.

Fetching the address from the interrupt register is time consuming, and involves several load/store operations. A first exemplary assembly code (written in capital letters), and a detailed explanation of the code line, and of the instruction are shown. This assembly code performs a fetch of the content of the interrupt register :
//update stack pointer, the stack pointer stored in R31, store three general
purpose registers R0, R1, R2 in stack;

| | |
|---|---|
| STWU | R0, 4(R31); |
| STWU | R1, 4(R31); |
| STWU | R2, 4(R31); |

//save the content of the branch register CTR in stack, the content of CTR is first written to a general purpose register and just then can be written to stack;

| | |
|---|---|
| MFSPR | R1, CTR |
| STWU | R1,4(R31) |

//reset R0, load the address of the interrupt register (i.e.- IRADD) to a general purpose register, first load the high portion (the most significant bits, IRADD_H), then load the low portion of the address (the least significant bits, IRADD_L) to R0.

| | |
|---|---|
| XOR | R0, R0,R0 |
| ORIS | R1, R0, IRADD_H |
| ORI | R1, R1, IRADD_L |

//load IRADD to branch register CTR, IRADD is first written to a general purpose register R2 and then written to CTR

| | |
|---|---|
| LWZ | R2, 0(R1) |
| MTSPR | CTR, R2 |

// branch to CPU interrupt vector, the address of the CPU interrupt vector is stored within interrupt register, wherein the address of the interrupt register is stored in CTR
BCTR

After the CPU finishes to execute the CPU interrupt request handler routine, it resumes to the instruction set which was executed before it started to execute the CPU interrupt request handler routine. This restoration is time consuming, and involves several load/store operations. A second exemplary code is used to restore the content of R0,R1,R2 and CTR which were previously written to the stack :
//restore the content of CTR from stack, first write the content of CTR within stack to general purpose register Rl and then send the content of R1 to CTR

| | |
|---|---|
| POR | R1, 4(R31) |
| MOV | CTR,R1 |

//restore the content of R0,R1 and R2 from stack

| | |
|---|---|
| POPW | R2, 4(R31) |
| POPW | R1, 4(R31) |
| POPW | R0, 4(R31) |

A disadvantage of the prior art method is that both fetching the address of the interrupt vector from the interrupt register and restoring the content of the registers involved in this fetch is time consuming. The prior art method is also very awkward, and is inefficient.

Today there is a need to respond in a very fast manner to an increasing number of interrupt requests, especially in the field of embedded microprocessors.

It would be desirable to accelerate the response to interrupt requests, to simplify the manner in which interrupt requests are handled, and to decrease the number of store operations involved in the execution of a interrupt request handler routine.

### BRIEF DESCRIPTION OF THE DRAWINGS

While the invention is pointed out with particularity in the appended claims, other features of the invention are disclosed by the following detailed description taken in conjunction with the accompanying drawings, in which:
FIG. 1 is a block diagram of a microprocessor unit, according to a preferred embodiment of the invention;
FIG. 2 is a schematic diagram of the content of a portion of memory module, according to a preferred embodiment of the invention and of the content of a look up table, stored within interrupt address generator, according to an embodiment of the invention;
FIG. 3 is a schematic description of an interrupt address generator, according to a preferred embodiment of the invention; and
FIG. 4 illustrates in flow chart form, in accordance with the present invention.

### DESCRIPTION OF THE PREFERRED EMBODIMENT

It should be noted that the particular terms and expressions employed and the particular structural and operational details disclosed in the detailed description and accompanying drawings are for illustrative purposes only and are not intended to in any way limit the scope of the invention as described in the appended claims.

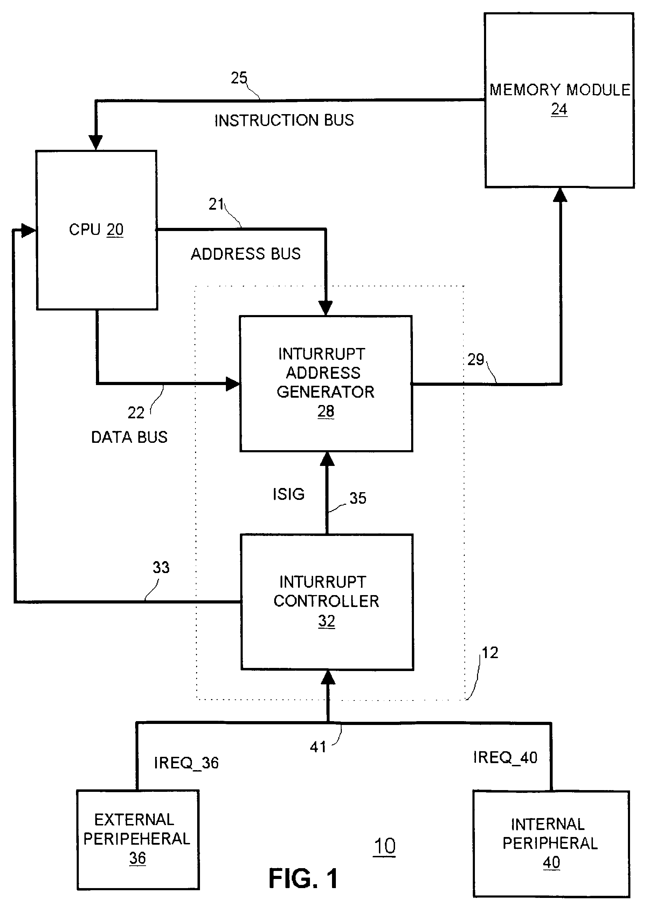

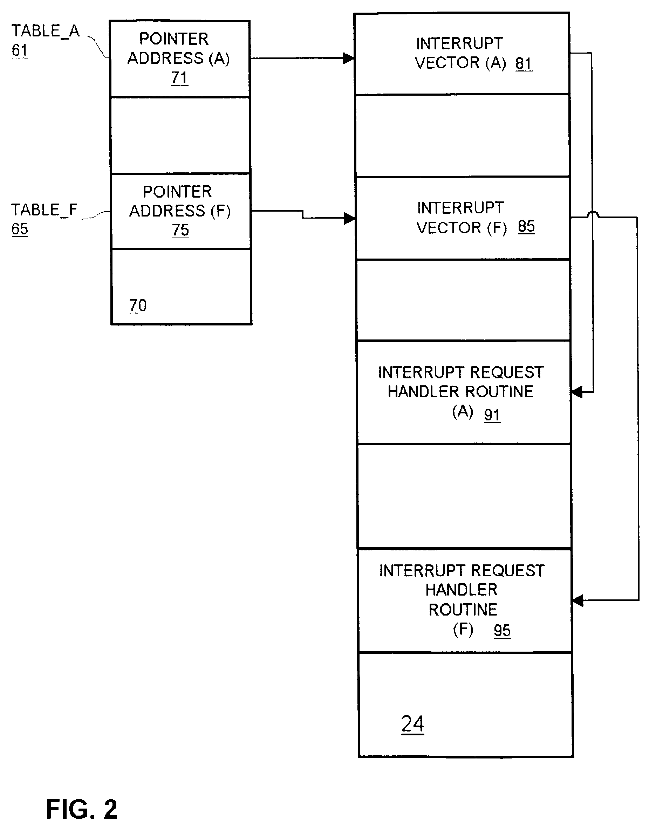

FIG. 1 is a block diagram of a microprocessor 10 having a memory module 24, a central processing unit (i.e.- CPU) 20, a plurality of interrupt request generators 36 and 40 and a system 12 for allowing central processing unit 20 to access a plurality of interrupt handler routines, according to an embodiment of the invention. System 12 comprises of interrupt controller 32 and interrupt address generator 28. FIG. 2 is a schematic diagram of the content of memory module 24, according to a preferred embodiment of the invention and of the content of a look up table 70, stored within interrupt address generator 28, according to an embodiment of the invention.

Plurality of interrupt request generators 36, 40 are coupled, via bus 41, to interrupt controller 32 for sending a plurality of IREQs, such as IREQ_36 and IREQ_40 to interrupt controller 32. Interrupt request generators 36, 40 are further coupled (not shown) to CPU 20 for receiving data and control signals. CPU 20 is coupled to memory module 24 via instruction bus 52, for receiving instructions to be executed by CPU 20. CPU 20 is coupled to interrupt address generator 21 via instruction address bus 25, for providing addresses the instructions stored within memory module 24. CPU 20 is coupled to interrupt address generator 28 via data bus 22, for writing data such as a BASE address, to interrupt address generator. Interrupt controller 32 is coupled via bus 33 to CPU 20, for sending a CPU interrupt request to CPU 20. Interrupt controller 32 is coupled to interrupt address generator 28 via bus 35. Interrupt address generator 28 is coupled to memory module 24 via bus 29, for providing the address of an instruction to be sent to CPU 20 and to be executer thereof.

When Interrupt controller 32 receives an IREQ, the interrupt controller 32 determines which of the IREQs it received has a highest priority, it determines whether the incoming IREQ has a higher priority value than the level currently being serviced, and issues a CPU interrupt request (i.e.- IRQ) to CPU 20 and sends the interrupt address generator 28 an index signal ISIG, indicating which of the interrupt request generator issued the IREQ to be serviced (i.e - the selected request generator and the selected interrupt request). Interrupt controllers are available in the prior art which provide overall management in an interrupt driven microcomputer system.

When CPU 20 is ready to service an interrupt request, it sends a CPU selected address to Interrupt address generator 28. When interrupt address generator 28 receives the CPU selected address, it provides a selected pointer address. Conveniently, the selected pointer address is generated after the selection of the selected IREQ, and reception of ISIG. Preferably, the selected pointer address is generated when interrupt address generator 28 receives the CPU selected address. Preferably, the selected pointer address points to a selected interrupt vector, the selected interrupt vector has a first portion that holds the address of the selected interrupt request handler routine. A second portion of the interrupt vector stores a branch opcode.

Memory module 24 receives the selected pointer address from interrupt address generator 28, and sends CPU 20 the selected interrupt vector. CPU 20 receives the selected interrupt vector and branches to the first instruction of the selected interrupt request handler routine. CPU 20 continues to execute the selected interrupt request handler routine until the routine ends. After CPU 20 finishes to execute the selected interrupt request handler routine, CPU 20 resumes to the instruction set which was executed before it started to execute the selected interrupt request handler routine.

Conveniently, interrupt address generator 28 can generate the selected pointer address by a means of a look up table 70. Look up table 70 is stored in a memory unit, such as a Read And write Memory (i.e. -RAM) module, or a set of registers. Look up table 70 has a plurality of entries, each entry is stored in a memory word, wherein the ISIG'th memory word holds the location of the selected interrupt vector. For example, the fifth memory word within the RAM module stores the address of the fifth interrupt vector, that points to the interrupt request handle routine that services the fifth interrupt request generator.

Referring to FIG. 2, look up table 70 is stored within an array of memory words. The A'th memory word (denoted as TABLE_A) 61 stores the address (referred to as POINTER ADDRESS (A)) 71 of the A'th interrupt vector (referred to as INTERRUPT VECTOR (A)) 81. The A'th interrupt vector 81 points to the A'th interrupt request handler routine (referred to INTERRUPT REQUEST HANDLER ROUTINE (A)) 91. The F'th memory word (denoted as TABLE_F) 65 stores the address (referred to as POINTER ADDRESS (F)) 75 of the F'th interrupt vector (referred to as INTERRUPT VECTOR (F)) 85. The F'th interrupt vector 85 points to the F'th interrupt request handler routine (referred to INTERRUPT REQUEST HANDLER ROUTINE (F)) 95. The interrupt vectors and the interrupt request handler routines are stored in memory module 24.

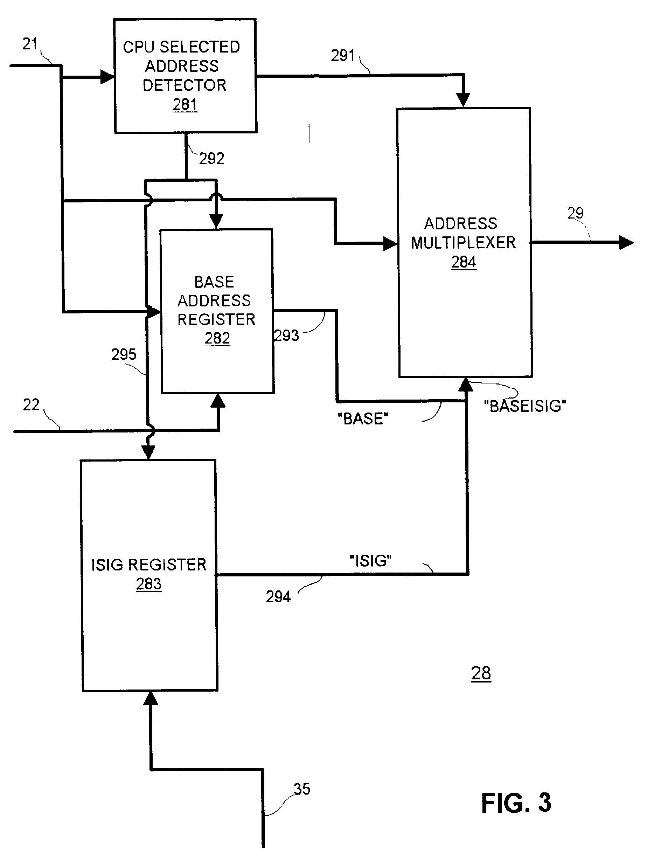

FIG. 3 is a schematic description of interrupt address generator 28, according to a preferred embodiment of the invention. Preferably, the interrupt vectors are stored in consecutive locations within memory module 24. Interrupt address generator 28 comprises of base address register 282, for storing a BASE address within memory module, a CPU selected address detector 281, for detecting when CPU 20 outputs a CPU selected address, a ISIG register 283, for storing ISIG, an address multiplexer 284, for selecting whether memory module 24 receives an address that is provided by CPU 20, or an address that is generated by interrupt address generator 28. Adress multiplexer 284 has input 2841.

CPU selected address detector 281, address multiplexer 284 and base address register are coupled to CPU 20 via bus 21. Input 2841 of address multiplexer 284 is coupled to base address register 282 and ISIG register 283 via buses 293 and 294 accordingly. ISIG register 283 is coupled to interrupt controller 32 via bus 35. CPU selected address detector 281 is coupled to address multiplexer 284 via bus 291 and to CPU via bus 22. Base address register can receive a BASE address from CPU 20 via bus 22.

CPU 20 sends addresses via bus 21. If CPU sends an address which is not the CPU selected address, then this address is sent, via address multiplexer 284 and bus 29 to memory module 24. If CPU 20 sends a CPU selected address via bus 21, it is detected by CPU selected address detector 281. CPU selected address detector 281 sends a DETECT signal, via bus 292 to base address register 282, via bus 295 to ISIG address register, and via bus 291 to address multiplexer 284, causing base address register 282 to send BASE address via bus 293 to address multiplexer and causing ISIG register to send ISIG to address multiplexer 284. Bus 294 provides the least significant bits of the selected pointer address and bus 293 provides the most significant bits of the selected pointer address. The DETECT signal from CPU selected address detector 291 causes address multiplexer 284 to output the selected pointer address, provided by base address register 282 and ISIG register 283. Usually, ISIG is multiplied by a factor before being added to the BASE address. This factor reflects the ratio between the length of an interrupt vector to the width of memory module 24. This can be done by coupling the I'th output bit of bus 294 to the (I+J)'th bit of input 2841 of address multiplexer 284, wherein the fgactor is to by the power of J. Conveniently, the BASE address is the location of the first interrupt vector within memory module 24.

For example, if ISIG equals 4, ISIG can be any integer between 0 and 127, memory module 24 is 8 bits wide, each interrupt vector is 16 bits wide, (thus ISIG is multiplied by two = 16/8), the first interrupt vector is stored at address $0500, and the interrupt vectors are stored in consecutive locations within memory module 24. The selected pointer address equals $0508 = $500 + 2 * 4. Base address register 282 provides the eight most significant bits of the selected pointer address, the least significant bit equals "0" and the remaining bits are provided by ISIG register.

In a further embodiment of the invention, the selected pointer address can point directly to the interrupt request handler routine, instead of pointing to the selected interrupt vector. The addresses of the various interrupt handler routines can be generated by various means. For example, a look up table within the interrupt address generator can hold the locations of the different interrupt request handler routines; the various handler routines can be stored in various locations of memory module 24, wherein there is a known relation between the location of an interrupt request handler, and ISIG, wherein the interrupt address generator receives ISIG and generates an address, according to the known relation.

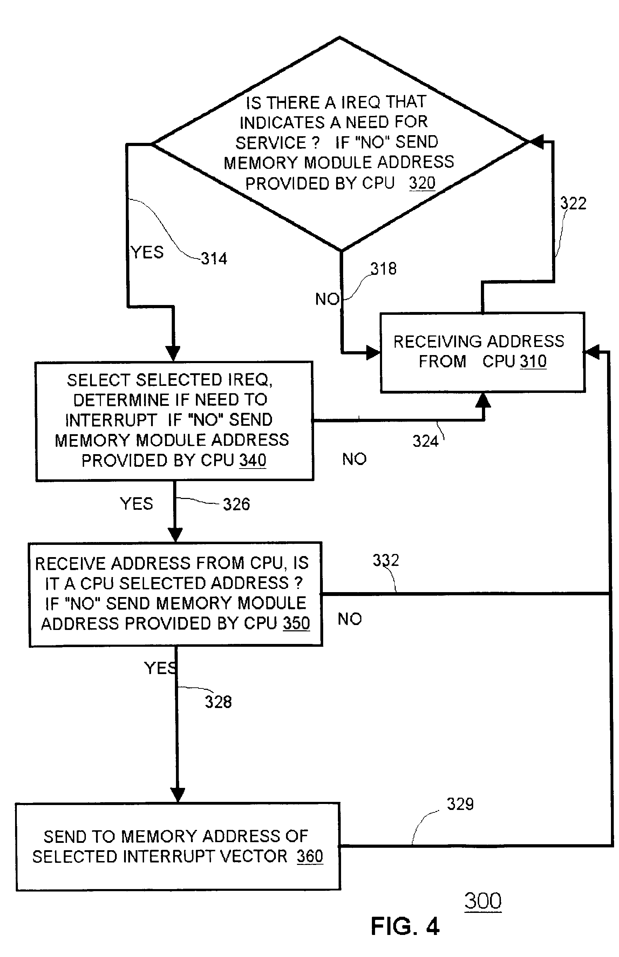

FIG. 4 is a flow chart of method 300 for allowing CPU 20 to access a plurality of interrupt handler routines, according to a preferred embodiment of the invention. Boxes 310, 320, 330, 340, 350, and 360 represent various steps of method 300. Before steps 310-360 are executed, a plurality of interrupt vectors and interrupt request routine handlers are stored in predetermined locations of memory module 24. Usually the interrupt vectors and interrupt request handler routines are written by a programmer, and not by the user of the microprocessor 10, and they are rarely changed.

Method 300 comprises of the following steps :

Receiving, during step 310, an address of an instruction within memory module 24, the address is to be executed by CPU 20 and is provided by CPU 20.

Checking, during step 320, whether an interrupt request generator has generated an IREQ, which was not serviced. As indicated by path 318, if the answer is NO sending memory module 24 the address provided by CPU 20 and jumping to step 310.

Selecting a selected IREQ, which is the IREQ having the highest priority among the IREQ and determining whether the incoming IREQ has a higher priority value than the level currently being serviced, during step 340. As indicated by path 324, if the answer is NO sending memory module 24 the address provided by CPU 20 and jumping to step 310. In another embodiment of the invention the interrupt controller 32 sends CPU 20 an IRQ upon receiving a IREQ and CPU 20 determines whether the incoming IREQ has a higher priority value than the level currently being serviced. As indicated by path 326, if the answer is YES step 340 is followed by step 350.

Checking, during step 350, whether the address that was received during step 310 is a CPU selected address. As indicated by path 332, if the answer is NO sending memory module 24 the address provided by CPU 20 and jumping to step 310. As indicated by path 328, if the answer is YES step 350 is followed by step 360.

Sending to memory module 24, during step 360, a selected pointer address, the selected pointer address points to a selected interrupt vector, the selected interrupt vector points to a selected interrupt request handler routine. The selected interrupt handler routine is to be executed by CPU 20 for servicing the interrupt request generator that generated the selected interrupt request. Conveniently, the selected pointer address is generated during steps 340, 350 or 360. The selected pointer address can be generated in various means. For example, it can be produced by a look up table, by a combinatory logic, by adding an index signal ISIG that indicates which is the selected interrupt register to a BASE address.

Jumping, as indicated by path 29, to step 310 for receiving an address of an instruction within memory module 24.

Thus, there has been described herein an embodiment including at least one preferred embodiment of an improved apparatus for allowing a central processing unit to access a plurality of interrupt handler routines.

It will be apparent to those skilled in the art that the disclosed subject matter may be modified in numerous ways and may assume many embodiments other than the preferred form specifically set out and described above.

Accordingly, the above disclosed subject matter is to be considered illustrative and not restrictive, and to the maximum extent allowed by law, it is intended by the appended claims to cover all such modifications and other embodiments which fall within the true spirit and scope of the present invention. The scope of the invention is to be determined by the broadest permissible interpretation of the following claims and their equivalents rather than the foregoing detailed description.

## Claims

1. A system for allowing a central processing unit to access a plurality of interrupt handler routines, the system being adapted to be coupled to a plurality of interrupt request generators for providing a plurality of interrupt requests, to a central processing unit and to a memory module;
wherein the memory module, coupled to the central processing unit, is adapted to store a plurality of interrupt vectors and a plurality of interrupt request handler routines, the plurality of interrupt request handler routines comprising a plurality of instructions to be executed by the central processing unit for servicing the plurality of interrupt requests, the plurality of interrupt vectors have a pointer that points to the plurality of interrupt handler routines;
wherein the system further comprises :
an interrupt controller, coupled to the plurality of interrupt request generators, and to the central processing unit, for receiving interrupt requests from the interrupt request generators, determining whether there is a need to respond to a selected interrupt request and notifying the central processing unit accordingly; and
an interrupt address generator, coupled to the memory module, to the central processing unit and to the interrupt controller, the interrupt address generator being being adapted to receive an index signal from the interrupt controller, the index signal defining which of the interrupt requests is the selected interrupt request, the interrupt address generator being adapted to receive a central processing unit selected address, the central processing unit selected address indicating that the central processing unit is ready to service an interrupt request, the interrupt address generator is for generating a selected pointer address, the selected pointer address points to a selected interrupt vector, the selected interrupt vector has a pointer that points to a selected interrupt request handler routine, the selected interrupt request handler routine is to be executed by the central processing unit for servicing the interrupt request generator that generated the selected interrupt request.

2. The system of claim 1 wherein the interrupt address generator generates the selected pointer address after receiving the central processing unit selected address.

3. The system of claim 1 wherein the interrupt address generator stores a look up table; and
wherein the look up table is comprised of a plurality of entries, for storing the location of the interrupt vector.

4. The system of claim 1 wherein the plurality of interrupt vectors are stored in consecutive order in the memory module; wherein the interrupt address generator further comprising :
a central processing unit selected address detector, coupled to the central processing unit, for receiving from the central processing unit addresses of instructions to be fetched from the memory module, for detecting when the central processing unit provided a central processing unit selected address, and for sending a DETECT signal accordingly;
a base address register, coupled to the central processing unit and to the central processing unit selected address detector, for storing the address of a first interrupt vector and for providing the address of a first interrupt vector, when receiving the DETECT signal;
an index register, coupled to the central processing unit, to the interrupt controller and to the central processing unit selected address detector, for receiving the index signal, and providing the index signal when receiving the DETECT signal;
an address multiplexer, coupled to the index register, to the central processing unit, to the base address register, to the memory module and to the central processing unit selected address detector, for providing the memory module an address of an instruction to be fetched to the central processing unit;
wherein the address multiplexer provides the memory module an address that is provided by the base address register and the index register upon the reception of a DETECT signal.

5. A system for allowing a central processing unit to access a plurality of interrupt handler routines, the system is adapted to be coupled to a plurality of interrupt request generators for providing a plurality of interrupt requests, to a central processing unit and to a memory module;
wherein the memory module, coupled to the central processing unit, is adapted to store a plurality of interrupt request handler routines, the plurality of interrupt request handler routines comprising a plurality of instructions to be executed by the central processing unit for servicing the plurality of interrupt requests;
wherein the system further comprising :
an interrupt controller, coupled to the plurality of interrupt request generators, and to the central processing unit, for receiving interrupt requests from the interrupt request generators, determining whether there is a need to respond to a selected interrupt request and notifying the central processing unit accordingly; and
an interrupt address generator, coupled to the memory module, to the central processing unit and to the interrupt controller, the interrupt address generator is being adapted to receive an index signal from the interrupt controller, the index signal defining which of the interrupt requests is the selected interrupt request, the interrupt address generator is being adapted to receive a central processing unit selected address, the central processing unit selected address indicating that the central processing unit is ready to service an interrupt request, the interrupt address generator is for generating a selected pointer address, the selected pointer address points to a selected interrupt request handler routine, the selected interrupt request handler routine is to be executed by the central processing unit for servicing the interrupt request generator that generated the selected interrupt request.

6. A method for allowing a central processing unit to access a plurality of interrupt request handler routines, the interrupt request handler routines are to be executed by a central processor unit for servicing interrupt requests generated bya plurality of interrupt request generators, the method comprising the steps of :
recieving an address of an instruction within the memory module, the address is to be executed by the central processing unit and is provided by the central processing unit;
checking whether an interrupt request generator has generated an interrupt request to be serviced, if the answer is NO sending the memory module the address of an instruction within the memory module, and jumping to a step of receiving an address of an instruction within the memory module;
selecting a selected interrupt request, and determining whether the central processing unit has to service the selected interrupt request; if the answer is NO sending to the memory module the address of an instruction within a memory module that was provided by the central processing unit, and jumping to the step of receiving an address of an instruction within the memory module;
checking whether the address an instruction within the memory module that was provided by the central processing unit is a central processing unit selected address; if the answer is NO sending to the memory module the address of the instruction within the memory module that was provided by the central processing unit and jumping to step of receiving an address of an instruction within the memory module;
generating a selected pointer address and providing the selected pointer address to the memory module, the selected pointer address points to a selected interrupt vector, the selected interrupt vector points to a selected interrupt request handler routine, the selected interrupt request handler routine is to be executed by the central processing unit for servicing the interrupt request generator that generated the selected interrupt request; and
jumping to step of receiving an address of an instruction within the memory module.

7. The method of claim 6 wherein the selected pointer address is generated by a look up table.

8. The method of claim 6 wherein the selected pointer address is generated by adding an address of a first interrupt vector to an index signal, the index signal indicating which is the selected interrupt request.

9. A method for allowing a central processing unit to access a plurality of interrupt request handler routines, the interrupt request handler routines are to be executed by a central processor unit for servicing interrupt requests generated bya plurality of interrupt request generators, the method comprising the steps of :
receiving an address of an instruction within the memory module, the address is to be executed by the central processing unit and is provided by the central processing unit;
checking whether an interrupt request generator has generated an interrupt request to be serviced, if the answer is NO sending the memory module the address of an instruction within the memory module, and jumping to a step of receiving an address of an instruction within the memory module;
selecting a selected interrupt request, and determining whether the central processing unit has to service the selected interrupt request; if the answer is NO sending to the memory module the address of an instruction within a memory module that was provided by the central processing unit, and jumping to the step of receiving an address of an instruction within the memory module;
checking whether the address an instruction within the memory module that was provided by the central processing unit is a central processing unit selected address; if the answer is NO sending to the memory module the address of the instruction within the memory module that was provided by the central processing unit and jumping to step of receiving an address of an instruction within the memory module;
generating a selected pointer address and providing the selected pointer address to the memory module, the selected pointer address points to a selected interrupt request handler routine, the selected interrupt request handler routine is to be executed by the central processing unit for servicing the interrupt request generator that generated the selected interrupt request; and
jumping to step of receiving an address of an instruction within the memory module.
